# EUROPEAN PATENT SPECIFICATION

(11) **EP 0 906 722 B1**
(45) Date of publication and mention of the grant of the patent: **02.07.2003**
(21) Application number: 98118226.4
(22) Date of filing: 25.09.1998
(51) Int. Cl.: A01G 9/10, A01C 1/04

(54) **Method for sowing small seeds such as tomato seeds**
Verfahren zur Anzucht von kleinen Samen sowie Tomatensamen
Methode de semis de petites graines comme des graines de tomates

(30) Priority: 02.10.1997 IT PC970029
(43) Date of publication of application: 07.04.1999
(73) Proprietor: Seed Pack S.r.l., 27100 Pavia (IT)
(72) Inventor: Lomonaco, Angelo, 43045 Fornovo Taro (IT); Canova, Ubaldo, 46030 Sustinente (IT)
(74) Representative: La Ciura, Salvatore

(56) References cited:
- EP-A- 0 097 735
- FR-A- 2 593 018
- GB-A- 927 792
- GB-A- 2 300 100

## Description

This invention relates to a method for sowing small seeds such as tomato seeds.

The method in accordance with the invention requires the use of containers made of biodegradable material, in particular tubular containers open at both ends which are filled with a growing medium such as dried peat or other inert material in which the seeds are inserted; these containers are buried in the soil at the appropriate time so that they project slightly above the surface.

This system enables individual seeds to be planted even on difficult soils such as clayey soils which form a crust on the surface that individual shoots are often not strong enough to break.

The medium in which the seed is planted will preferably consist of dry material; if this is the case, the seeds can be planted in the containers well in advance of the sowing season, and germination can then be initiated merely by watering the medium containing the seed before or after burial in the soil.

In this way the containers can be prepared well in advance, with considerable financial benefits.

The description below refers to the specific case of a method for sowing tomato seeds, but the same method could obviously be used for sowing all types of small seeds.

As experts in the field will be aware, small seeds such as tomato seeds possess weak germinative energy and are therefore often not strong enough to break the crust that forms on the soil surface, especially in areas with clayey soil, so that the plant is unable to develop.

For this reason, seeds are sometimes planted and left to germinate in a nursery, where they are sown in a suitable medium such as peat, the seedlings being planted out later.

In other cases, especially when the size of the cultivation makes direct sowing preferable and more economical, tomato seeds are sown in continuous rows, groups of 5/6 seeds being deposited on the soil so that the group of shoots is strong enough to break the crust and push up through the soil.

Good results are only obtained with precision sowing in a few cases on particularly suitable soil.

In most cases, one of the two methods described above generally has to be used, with the inevitable drawbacks. Sowing in the nursery requires a considerable amount of energy, investments and labour to produce the seedlings and subsequently transplant them. Sowing in continuous rows requires a much larger amount of seed, so it is only economical if the seed is of low quality and therefore low cost.

The subsequent necessary work of pricking out also involves additional costs, which would be best avoided.

The said problem is solved by this invention, which offers a method for sowing small seeds that requires the seeds to be sown in small tubular containers previously filled with a medium consisting of the material most suitable soil.

In most cases, one of the two methods described above generally has to be used, with the inevitable drawbacks.

EP-A-0.097.735 relates to a method for the cultivation of seedlings, wherein a series of plant holders are united to form packs or groups, are brought in a greenhouse and subsequently are planted out individually. FR 2.593.018 relates to a method for protecting sugar beets against rhizomania, wherein a tube is used to protect the seedling both mechanically (avoiding the contact with the fungus) and chemically (the wall of the tube is impregnated with a fungicide). The tube is inserted into the soil, and completely buried.

Sowing in the nursery requires a considerable amount of energy, investments and labour to produce the seedlings and subsequently transplant them. Sowing in continuous rows requires a much larger amount of seed, so it is only economical if the seed is of low quality and therefore low cost.

The subsequent necessary work of pricking out also involves additional costs, which would be best avoided.

The said problem is solved by this invention, which offers a method for sowing small seeds that requires the seeds to be sown in small tubular containers previously filled with a medium consisting of the material most suitable for the type of seed, such as peat; these containers are then planted in the soil so that a small amount projects above the surface to prevent the formation of a hard crust above the seed, which can thus sprout freely.

The method in accordance with the invention also offers many other advantages, because suitable complements such as insecticides, specific fertilisers, etc. can be mixed with the growing medium inside or outside the container, to produce excellent results with a minimal amount of the products.

In particular, fertiliser can advantageously be mixed with the medium in the container, while insecticides can also be applied to the container itself, for example to its outer surface.

The result is another very advantageous characteristic of the method in accordance with the invention: by drastically reducing the amount of pesticides and chemicals normally used, it also reduces pollution.

This and other characteristics will appear more clearly from the following detailed description, provided by way of example but not of limitation, by reference to the annexed figures in which:
- figure 1 schematically illustrates a perspective view of a possible configuration of the container used to implement the method in accordance with the invention
- figure 2 shows a cross-section of the container illustrated in figure 1
- figure 3 shows the same container after development of the seedlings invention.

With reference to the annexed figures, the method in accordance with the invention requires the use of containers, in particular tubular containers open at both ends, shown as no. 1 in the drawings, which are filled with a suitable medium 2, such as peat or the like, in which a seed 3 is planted.

Containers 1 will have e.g. a cylindrical or a frusto-conical shape, and will be made of biodegradable material, for example cellulose material such as cardboard or the like, and could be approx. 10-12 cm long, with a diameter of approx. 10-15 mm.

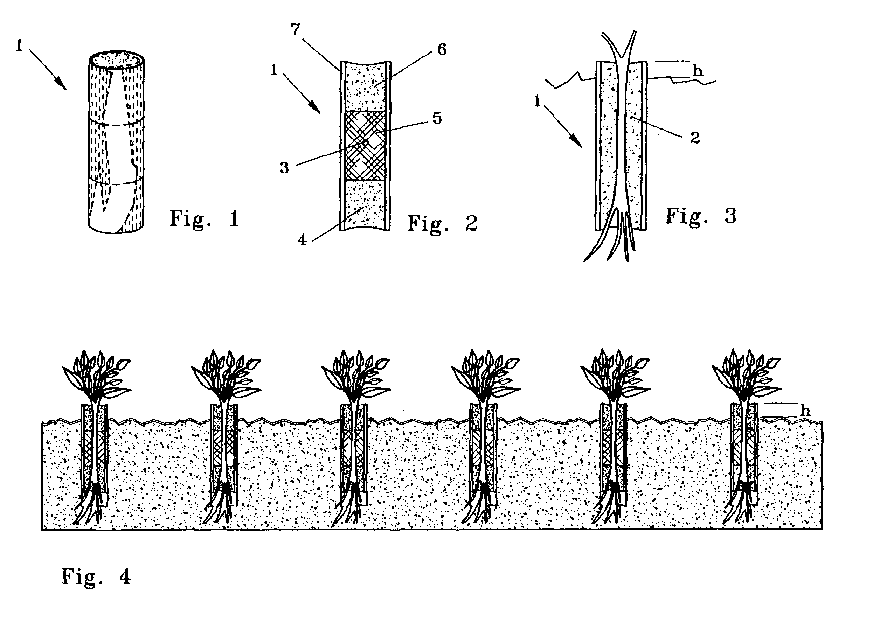

When these containers (see figures 3 and 4) are inserted in the soil, one end (marked "h") is left to protrude slightly so that the soil does not cover the top of the cylinder and create the very surface crust that the invention is designed to avoid.

In this way, the shoot will only encounter soft material during its development, and can easily reach the surface and develop.

To prepare the cylinders for sowing, they could first be half filled, then the seed introduced, and then filled up to the top with the peat or other material selected.

This growing medium will preferably consist of dried peat, so that the seed does not start to germinate until it is watered.

It will thus be possible to prepare the cylinders for planting over a period of several months, so that the work which is usually performed as the sowing season approaches does not need to be concentrated in a short time.

The seeds will be perfectly preserved in this dry environment, and will only start to germinate when they are watered or planted in damp soil.

The material in the cylinders could be arranged in layers.

For example (see Figure 2), a layer 4 of specific fertiliser could be distributed on the base; in particular, this layer could be constituted by a fertiliser based on ammonium polyphosphate, which strongly stimulates the root apparatus, encouraging the root to travel rapidly along the length of the tube and develop downwards into a taproot.

The deeper this root grows down into the soil, the more it will come into contact with the moist environment necessary for growth; it will also be more firmly anchored in the soil and the plant will be stronger.

An intermediate layer 5 containing the seed (which, as mentioned, could be constituted by peat) could be added above layer 4.

The top layer 6 could also be constituted by peat or another material such as shredded bark, porous material, etc., which is able to absorb water and therefore maintain a degree of moisture in the surrounding environment without hindering the development of the shoots and preventing them from pushing above ground.

The shape of these tubular elements is not critical, and the most suitable configuration can be chosen for the use required.

For example, tubular elements with a hexagonal section could be used to exploit the available space more efficiently.

A set of these tubular elements would be prepared by joining them together on a horizontal surface and filling them with the various layers of material in the required order.

It would also be possible to mix a small amount of fertiliser and/or insecticide or pesticide with the layers of growing medium to protect the plant effectively; the latter substances could also be applied to the container, e.g. to its outer surface, or by soaking the cardboard or the material it is made of.

Here again, the use of containers for the seedlings produces considerable savings, as they can be effectively defended against pest attack with minimal amounts of pesticides.

The method in accordance with the invention is therefore also highly advantageous from the ecological standpoint.

Finally, if at least one section of tube 1, such as top section 7, is reinforced, a ring or band can be applied to each plant.

As specialists in the field will be aware, this is a ring-shaped band applied round the stem of plants and then tightened so strongly as to prevent or slow the flow of lymph back down to the soil along the outer channels in the bark, thus increasing the size and quality of the fruit produced by the plant.

In this case it would be sufficient for the top end 7 of tube 1 to contain a strengthened, stiffened section, for example covered with a ring made of plastic or the like, which should still be biodegradable, so that when the plant grows, the ring exerts a tightening effect on the bark to produce the desired result.

For this purpose, the inner diameter of tube 1 should obviously be suited to the future diameter of the plant.

The method in accordance with the invention consequently produces considerable advantages, which can be summed up as follows:
- use of a smaller number of seeds per sowing surface unit
- the possibility of performing localised treatments with pesticides and specific fertilisers in the immediate vicinity of the seed
- easier mechanisation of sowing operations.

## Claims

1. Method for the direct sowing small seeds, wherein:
• a tubular container open at both ends is filled with a growing medium suitable for the development and growth of the shoot
• a seed is planted in the said medium ; **characterized in that**
• the said container is inserted directly in the soil, leaving one end to protrude slightly above the soil surface

2. Method for sowing small seeds in accordance with claim 1, **characterised by** the fact that the said medium is constituted by peat.

3. Method for sowing small seeds in accordance with claim 2, **characterised by** the fact that the said support medium is constituted by dried peat.

4. Method for sowing small seeds in accordance with claim 1, **characterised by** the fact that the said medium is mixed with a suitable amount of pesticides.

5. Method for sowing small seeds in accordance with claim 1, **characterised by** the fact that the bottom layer of the said medium is mixed with or constituted by a specific fertiliser designed to aid root development.

6. Method for sowing small seeds in accordance with the preceding claims, in which the said container is made of biodegradable cellulose material.

7. Method for sowing small seeds in accordance with the preceding claims, in which the said container is made of cardboard.

8. Method for sowing small seeds in accordance with claim 1, 2 or 6, **characterised by** the fact that the said containers have a hexagonal section.

9. Method for sowing small seeds in accordance with the preceding claims, **characterised by** the fact that there is a ring-shaped reinforcement at the top of the said containers designed to constitute a fruiting band for the plant.

## Patentansprüche

1. Verfahren zum direkten Säen kleiner Samenkörner, wobei:
- ein röhrenförmiger Behälter, der an beiden Seiten offen ist, mit einem Wachstums-Medium gefüllt wird, welches für das Wachstum und die Entwicklung der Sprösslinge geeignet ist;
- ein Samenkorn in besagtem Medium gepflanzt wird, **dadurch gekennzeichnet, dass**
- besagter Behälter in den Boden weisend eingeführt wird, wobei ein Ende leicht über die Bodenoberfläche herausragt.

2. Verfahren zum Säen kleiner Samenkörner gemäss Anspruch 1, **dadurch gekennzeichnet, dass** das besagte Medium aus Torf besteht.

3. Verfahren zum Säen kleiner Samenkörner gemäss Anspruch 2, **dadurch gekennzeichnet, dass** das besagte Wachstums-Medium aus getrocknetem Torf besteht.

4. Verfahren zum Säen kleiner Samenkörner gemäss Anspruch 1, **dadurch gekennzeichnet, dass** das besagte Medium mit einer geeigneten Menge an Pestiziden gemischt ist.

5. Verfahren zum Säen kleiner Samenkörner gemäss Anspruch 1, **dadurch gekennzeichnet, dass** die untere Schicht des besagten Mediums mit einem speziellen Dünger zur Unterstützung des Wurzelwachstums gemischt ist bzw. aus diesem speziellen Dünger besteht.

6. Verfahren zum Säen kleiner Samenkörner gemäss den vorhergehenden Ansprüchen, wobei der besagte Behälter aus biologisch abbaubarem Cellulose-Material besteht.

7. Verfahren zum Säen kleiner Samenkörner gemäss den vorhergehenden Ansprüchen, wobei der besagte Behälter aus Pappe besteht.

8. Verfahren zum Säen kleiner Samenkörner gemäss Anspruch 1, 2 oder 6, **dadurch gekennzeichnet, dass** die besagten Behälter einen hexagonalen Querschnitt haben.

9. Verfahren zum Säen kleiner Samenkörner gemäss den vorhergehenden Ansprüchen, **dadurch gekennzeichnet, dass** an der Oberseite der besagten Behälter eine ringförmige Verstärkung als Fruchtbandage für die Pflanze gebildet ist.

## Revendications

1. Procédé pour l'ensemencement direct de petites graines, dans lequel :
• un récipient tubulaire ouvert aux deux extrémités est rempli d'un milieu de croissance approprié pour le développement et la croissance de la pousse;
• une graine est plantée dans ledit milieu; **caractérisé en ce que**
• ledit récipient est inséré directement dans le sol en laissant légèrement dépasser une extrémité au-dessus de la surface du sol.

2. Procédé pour l'ensemencement de petites graines selon la revendication 1, **caractérisé en ce que** ledit milieu est constitué de tourbe.

3. Procédé pour l'ensemencement de petites graines selon la revendication 2, **caractérisé en ce que** ledit milieu est constitué de tourbe séchée.

4. Procédé pour l'ensemencement de petites graines selon la revendication 1, **caractérisé en ce que** ledit milieu est mélangé avec une quantité appropriée de pesticides.

5. Procédé pour l'ensemencement de petites graines selon la revendication 1, **caractérisé en ce que** la couche inférieure dudit milieu est mélangée avec ou constituée d'un engrais spécifique conçu pour favoriser le développement des racines.

6. Procédé pour l'ensemencement de petites graines selon les revendications précédentes, dans lequel ledit récipient est fait d'une matière cellulosique biodégradable.

7. Procédé pour l'ensemencement de petites graines selon les revendications précédentes, dans lequel ledit récipient est fait de carton.

8. Procédé pour l'ensemencement de petites graines selon la revendication 1, 2 ou 6, **caractérisé en ce que** lesdits récipients ont une section hexagonale.

9. Procédé pour l'ensemencement de petites graines selon les revendications précédentes, **caractérisé en ce qu'**il y a un renfort annulaire en haut desdits récipients conçu pour constituer une bande de fructification pour la plante.
